# EUROPEAN PATENT APPLICATION

(11) **EP 1 712 897 A1**
(43) Date of publication of application: **18.10.2006**
(21) Application number: 05102850.4
(22) Date of filing: 12.04.2005
(51) Int. Cl.: G01N 21/89, G01N 21/898

(54) **Method of inspecting a broad article**

(71) Applicant: Meinan Machinery Works, Inc., Obushi-shi, Aichi 474-8543 (JP)
(72) Inventor: Koike, Masaru, c/o Meinan Machinery Works, Inc., Obu-shi, Aichi 474-8543 (JP); Okamoto, Hirotaka, Meinan Machinery Works, Inc., Obu-shi, Aichi 474-8543 (JP); Morita, Kouji, c/o Meinan Machinery Works, Inc., Obu-shi, Aichi 474-8543 (JP); Hiraoka, Noriyuki, Meinan Machinery Works, Inc., Obu-shi, Aichi 474-8543 (JP)
(74) Representative: Brunner, Michael John

(57) **Abstract**

A method of inspecting a broad article by using a plurality of line sensor cameras, more specifically a method of combining image data from such plural sensor cameras is disclosed. The line sensor cameras are disposed relative to the inspection surface of the broad article such that the sensor cameras have their own inspection ranges and also share in common a range which is overlapped by parts of the inspection ranges of the sensor cameras. A laser beam is projected to the overlapped range so that a line marking appears across the center of the overlapped range. The image data from any two adjacent line sensor cameras are combined through calculation in such a way that portions of data of images grabbed by the two adjacent sensor cameras are excluded on the basis of the line marking so that the inspection ranges of the two adjacent cameras cover complementarily the entire inspection range.

## Description

### BACKGROUND OF THE INVENTION

The present invention relates generally to a method of inspecting a broad article, or more specifically to a method of combining the data of separate images grabbed by a plurality of sensor cameras.

Various surface inspecting methods have been proposed heretofore which are designed to detect the presence of various kinds of defects or flaws such as stain, void, wrong color, unevenness of color, etc. on the surface of an article in the form of a continuous or discrete sheet or plate. Some inspecting methods are capable of detecting the surface for the size of such defects. Such inspecting methods are used for a wide variety of applications in many different fields.

Apparatus for practicing a surface inspecting method often uses a sensor camera such as CCD line sensor camera, 3CCD color line sensor camera, CCD area sensor camera, etc. for scanning the surface of an article which is being moved continuously or intermittently in a predetermined direction. When a single camera is used for inspecting a broad article, the camera must be spaced apart from the inspection surface of the article at a distance that is large enough for the camera to cover the entire region which is to be inspected. If the camera is arranged farther away from the inspection surface, however, the resolution is lowered. Additionally, the quality of image scanned by the camera tends to be easily influenced even by slight movement or vibration of the camera. The provision of a larger spaced distance between the article and the camera will inevitably make the apparatus larger in size. Thus, a desired accuracy of inspection may not be achieved by the use of a single sensor camera.

To overcome this problem, an inspection apparatus has been proposed which uses a plurality of sensor cameras disposed in alignment with one another at a spaced distance along the width of an article so that each camera covers its assigned section of the entire inspecting range on the article. Such an apparatus is disclosed, for example, by Publications of laid-open Japanese patent applications, Nos. H4-166749, H8-281920 and 2001-337042. Methods and apparatuses for combining the data of separate images from individual sensor cameras and then indicating the combined image on a single display unit are well known in the art. As is apparent from the Publication No. 2001-337042, however, it is difficult and hence troublesome to locate and set a plurality of sensor cameras accurately such that any two adjacent cameras cover their respective inspection ranges without having a range which is overlapped by parts of the respective inspection ranges of the two cameras or a range which is covered by neither of the two adjacent cameras.

The above-cited Publication No. H8-281920 discloses an arrangement of line sensor cameras in which two adjacent cameras share in common an inspection range of a predetermined dimension which is overlapped by parts of the respective inspection ranges of the two adjacent cameras. In the inspection apparatus having such camera arrangement, data for images of the inspection surface of the article taken by the two separate cameras need to be processed for combination of the image data so as to correspond with the actual image of the surface scanned by the line sensor cameras. The combination of separate images may be accomplished, for example, by averaging the image data transmitted from the two cameras, comparing the data from the cameras and adopting preferentially, for example, the data of a greater value, or adopting preferentially either one predetermined data, etc.

For the image data from two different cameras to be processed for appropriate combination of image data, the dimension of the inspection range which is overlapped by the inspection ranges of the two adjacent line sensor cameras must be figured out properly each time inspection or scanning is made by the line sensor cameras. If the position for inspection on the surface of the broad article relative to the line sensor cameras remains constant at all times, the above dimension of the overlapped range can be figured out readily and it may be used as a predetermined reference dimension in processing of the image data.

If the position of the inspection surface relative to the line sensor cameras is varied from time to time depending on the condition of the broad article, however, the dimension of the overlapped inspection range is also variable and, therefore, the image data for the inspection surface of the broad article may fail to correspond with the actual condition of the surface scanned by the line sensor cameras.

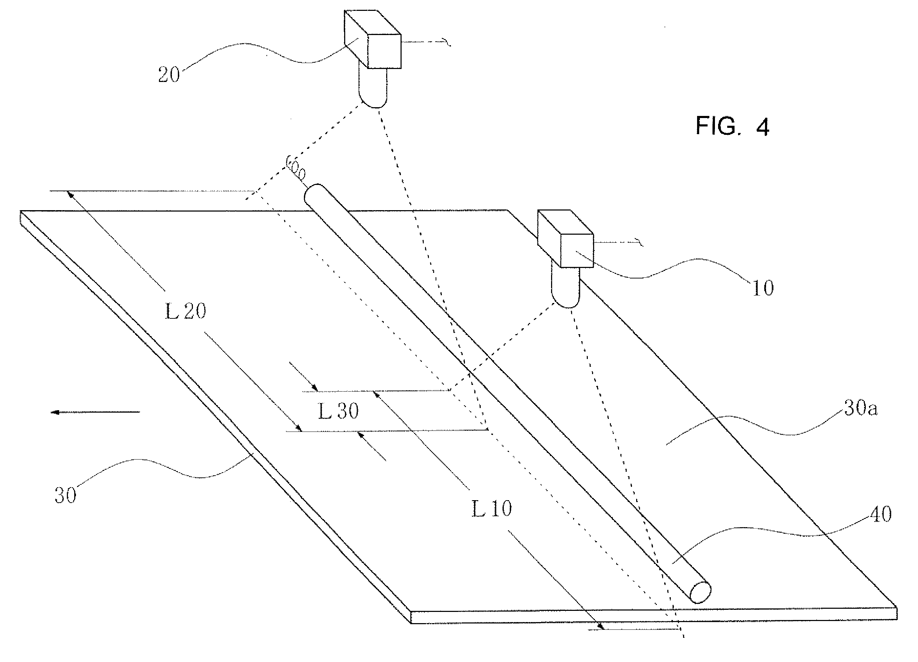

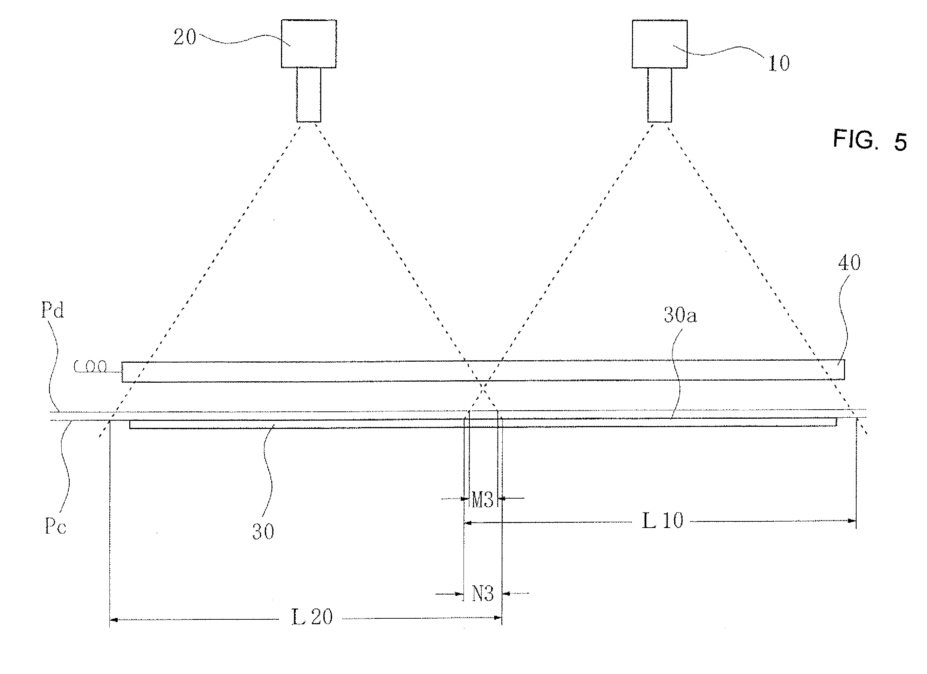

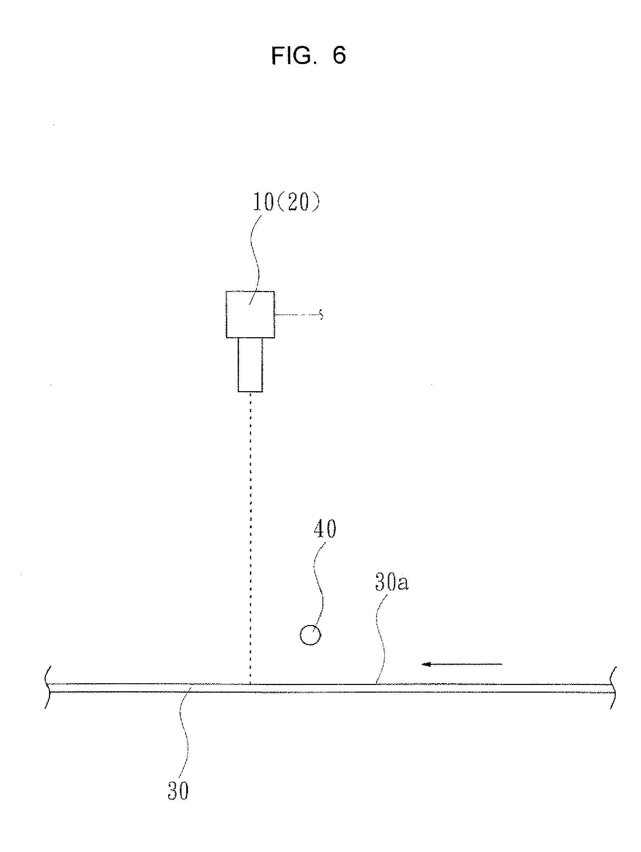

For better understanding of the underlying background of the present invention, reference is made to FIGS. 4 through 6 showing schematically an apparatus which has been conventionally used for practicing a method of inspecting a broad article. In the drawings, reference numeral 30 designates a article having a broad surface 30a for inspection by a pair of line sensor cameras 10, 20 which is disposed above and oriented perpendicular to the inspection surface 30a of the article 30. The article 30 is conveyed in arrow direction as indicated in FIGS. 4, 6 with its inspection surface 30a normally lying at a position or a height indicated by a line Pc in FIG. 5. The two line sensor cameras 10, 20 located above the inspection surface 30a are spaced apart from each other along the width of the article 30 so that the cameras 10, 20 cover their inspection ranges L 10, L20, respectively, and have in common an inspection range L30 which is overlapped by parts of the respective inspection ranges L10, L20. The overlapped inspection range L30 has a predetermined dimension N3 when the inspection surface 30a is located at the position Pc. Reference numeral 40 designates a lamp for illuminating the inspection ranges L10, L20, L30 and their vicinities. For the sake of clarity of description, a device for processing image data transmitted by the cameras 10, 20 is omitted from the drawings.

In the above-described inspecting apparatus, as far as the article 30 moves with its inspection surface 30a located at the position Pc, the dimension of the actual overlapped inspection range L30 of the cameras 10, 20 coincides with the aforementioned dimension N3 and the surface 30a of the article 30 is inspected correctly by the line sensor cameras 10, 20. If the article 30 moves at an elevated position with its inspection surface 30a located at an elevated position or height Pd, however, the dimension of the actual inspection range L30 (FIG. 5) overlapped by the inspection ranges L 10, L20 of the line sensor cameras 10, 20 fails to coincide with the predetermined dimension N3, wherein the dimension M3 of the actual overlapped range L30 is smaller than the predetermined overlapped range N3. If the article 30 is moved with its inspection surface 30a located lower than the position Pc, on the other hand, the dimension of the range L30 then overlapped becomes greater than N3.

Publication of laid-open Japanese patent application No. 2000-349988 for an apparatus of combining picture signals proposes a solution to the above problem. According to the invention disclosed by this Publication, a distance sensor is provided at a position upstream of line sensors as seen in the direction in which a broad article or a steel plate is moved, which distance sensor is operable to measure the relative distance between the inspection surface of the steel plate and the line sensors. The apparatus has a calculating means for figuring out an inspection range which is overlapped by the respective inspection ranges of any two adj acent line sensors based on the above measured distance. The calculating means is also operable to calculate variation of the overlapped range which may be caused by any displacement of the inspection surface of the plate and to correct and combine the inspection data from the sensors on the basis of the calculation results.

This inspection method can be used advantageously in inspecting flat material having given thicknesses such as steel plate. More specifically, the method can work effectively in inspecting steel plates of different batches, each batch including a plurality of plates of a given thickness, because the measurement of the relative distance between the inspection surface of the plate and the line sensors and the subsequent calculation of the inspection range overlapped by the respective inspection ranges of any two adjacent line sensors based on the measured value are done only one time for each batch. Additionally, according to this inspection method, there would be very little error between the actual overlapped range and the calculated overlapped range.

However, the inspection method according to the Publication No. 2000-349988 is costly in that the apparatus for practicing the method calls for an instrument for measuring the distance between the inspection surface of the steel plate and the line sensors and also a device for calculating the inspection range overlapped by the respective inspection ranges of any two adjacent line sensors based on the measurement. The method is also disadvantageous in inspecting an article such as wood veneer sheet whose top surface is often wavy because the calculated value for the overlapped inspection range often fails to coincide with the value for the actual inspection range. For accurately inspecting an article which is moved continuously, the calculation for the overlapped inspection range must be done repeatedly at a short time interval. If the calculation is delayed, error occurs between the calculated value and the actual value for the overlapped range. For achieving accurate inspection, the conveying speed of the article may have to be slowed down, with the result that the inspection efficiency is affected.

### SUMMARY OF THE INVENTION

The present invention has been made in view of the above drawbacks and, therefore, an object of the present invention is to provide a method of inspecting a broad article which can solve the drawbacks. More specifically, a method of combining the data of separate images on the surface of a broad article grabbed by a plurality of sensor cameras is disclosed.

In order to achieve the above object, the present invention provides a method of inspecting by using a plurality of sensor cameras a article having a broad surface for inspection and movable in the direction across the width thereof. According to the method, firstly the sensor cameras are arranged spaced away from the inspection surface of the article and at an interval spaced away from each other along the width of the article such that the sensor cameras have an inspection range on the inspection surface, respectively, and any two adjacent sensor cameras share in common an inspection range which is overlapped by parts of the inspection ranges of the two adjacent sensor cameras. The sensor cameras are preferably line sensor cameras which are operable to take or grab line images on the inspection surface sequentially and to generate data of image, accordingly.

The inspection ranges and their vicinities on the inspection surface of the broad article are illuminated by a lamp. A marking is formed at an intermediate position in the overlapped common inspection range by emitting a light from a light projector. The line marking has a color which is different from any color included in the inspection surface of the broad article. The light projector should be a laser beam projector emitting a laser beam which creates a line marking extending across the overlapped common inspection range. Additionally the line marking should appear at the center of the overlapped common inspection range.

The image data generated by the two adjacent sensor cameras are combined together through calculation. In combining the image data, a portion of the data of image grabbed by one of the two adjacent sensor cameras and a portion of the data of image grabbed by the other sensor camera are excluded on the basis of the marking so that the inspection ranges of the two adjacent cameras cover complementarily the entire inspection range.

To put in other words, the image data generated by said two adjacent sensor cameras for the overlapped common inspection range are combined together through calculation in such a way that a portion of the data of image grabbed by one of the two adjacent sensor cameras, corresponding to an inspection range between the marking and one extremity of the inspection range of the one camera on the side adjacent to the inspection range of the other sensor camera and also a portion of the data of image grabbed by the other sensor camera, corresponding to an inspection range between said marking and one extremity of the inspection range of the other camera on the side adjacent to the inspection range of the one camera are excluded for the combination of the image data.

Features and advantages of the present invention will become more apparent to those skilled in the art from the following description of preferred embodiment of the invention, which description is made with reference to the accompanying drawings, wherein:

### BRIEF DESCRIPTIO OF THE DRAWINGS

FIG. 1 is a schematic perspective view showing an inspection apparatus which is usable in practicing a method of inspecting a broad article according to the invention;
FIG. 2 is a schematic a schematic front view of the inspection apparatus of FIG. 1;
FIG. 3 is a schematic a schematic side view of the inspection apparatus of FIG. 1;
FIG. 4 is a schematic perspective view showing an inspection apparatus which has been conventionally used in practicing a method of inspecting a broad article;
FIG. 5 is a schematic a schematic front view of the inspection apparatus of FIG. 4; and
FIG. 6 is a schematic a schematic side view of the inspection apparatus of FIG. 4.

### DETAILED DESCRIPTION OF THE EMBODIMENT

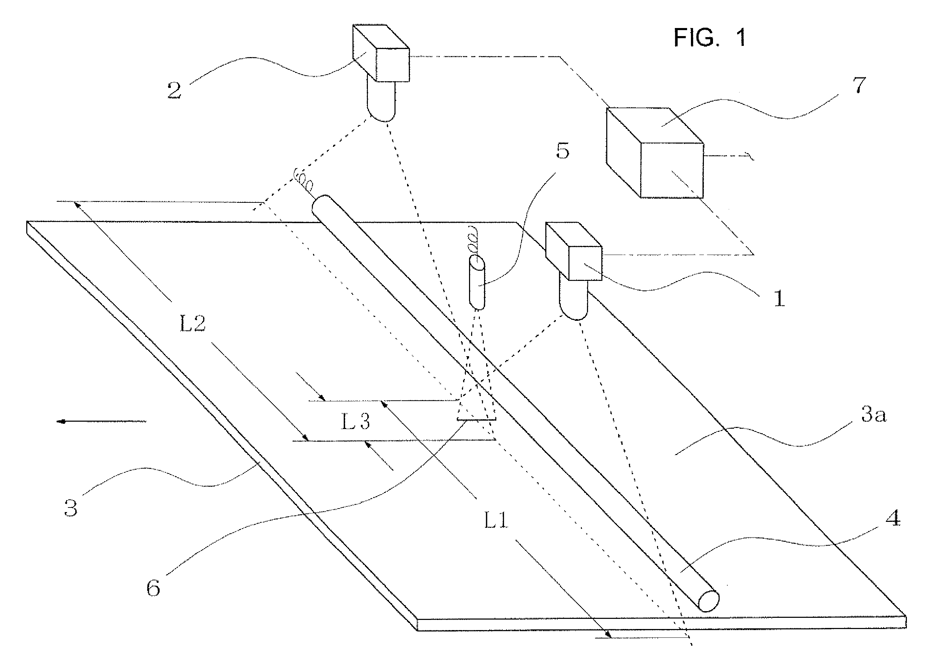

The following will describe a preferred embodiment of a method of inspecting a broad article according to the present invention with reference to FIGS. 1 through 3 showing an inspection apparatus which is usable in practicing the inspecting method of the invention. For the sake of clarity of illustration, an embodiment wherein the apparatus used only a pair of line sensor cameras will be described.

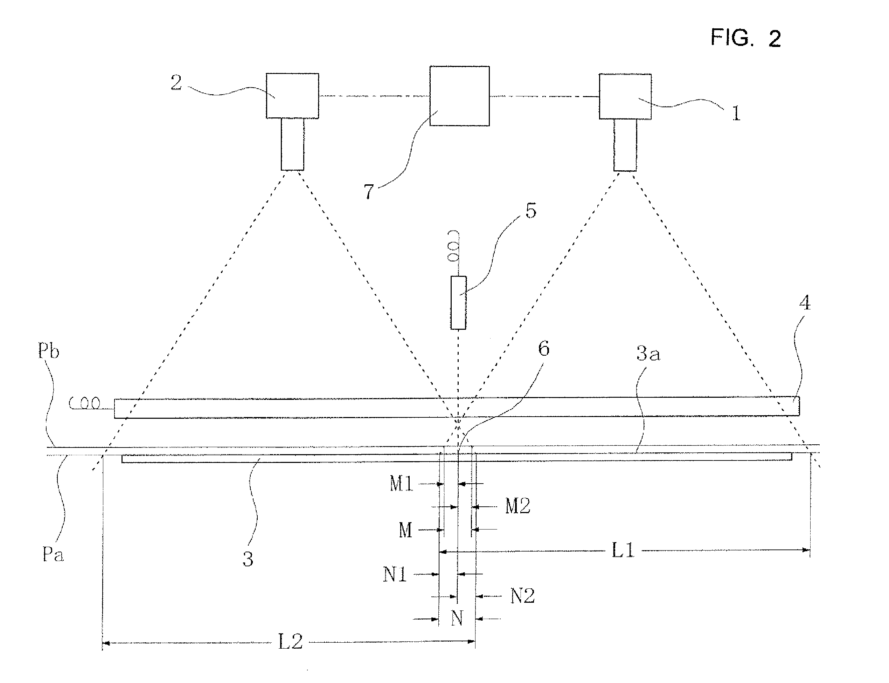

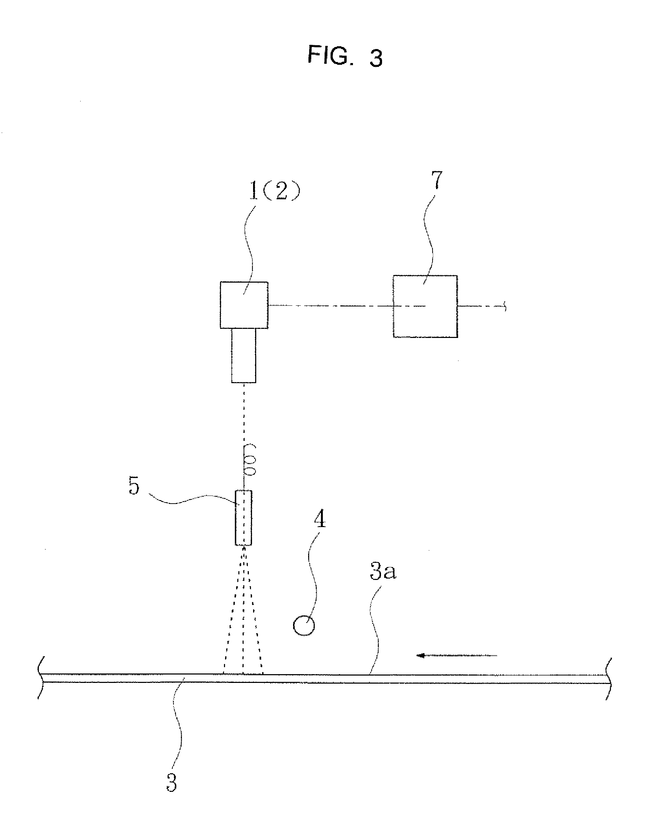

As in the aforementioned apparatus described with reference to FIGS. 4 to 6, a pair of line sensor cameras 1, 2, each ofwhich is operable to take or grab line images on a surface sequentially, is disposed above an article 3 which has a broad surface 3a for inspection by the cameras 1, 2 and is conveyed by any suitable means in arrow direction as indicated in FIGS. 1, 3 with the inspection surface 3a normally lying at a position or a height indicated by a line Pa in FIG. 2. The two line sensor cameras 1, 2 are aligned with each other in the direction of the width of the broad article 3 and oriented substantially perpendicular to the inspection surface 3a. The cameras 1, 2 are spaced apart from each other along the width of the article 3 in such a way that the cameras 1, 2 cover inspection ranges L1, L2, respectively, and have in common an inspection range L3 which is overlapped by parts of the respective inspection ranges L1, L2 and has a predetermined dimension N, or pixels corresponding thereto. An illumination lamp 4 is located above and adjacent to the inspection surface 3a for illuminating the inspection ranges L1, L2, L3 and their vicinities.

A light projector 5 is disposed above the article 3 at a position between the paired line sensor cameras 1,2 as seen from the top for emitting a light to the center of the overlapped inspection range L3 on the inspection surface 3a of the broad article 3 so that a marking 6 in the form of a short straight line appears extending across the overlapped range L3, as shown most clearly in FIG. 1. The line marking 6 should be of a color which is different from any color included on the inspection surface 3a. Actual dimension of the overlapped range L3 on the inspection surface 3a of the article 3 is figured out through calculation based on the image data transmitted from the line sensor cameras 1, 2 by a data processing unit 7, which delivers processed data to an inspection unit (not shown).

The following will describe in detail the calculation for combining the data of images for the overlapped inspection range L3 grabbed by the two line sensor cameras 1, 2. As stated earlier, the line sensor cameras 1, 2 are set in such a way that they have their own inspection ranges L1, L2 and share in common the overlapped range L3 having the predetermined dimension N, or pixels corresponding thereto, when the broad article 3 is moved with its inspection surface 3a lying at the position Pa.

At each moment of scanning of the inspection surface 3a of the article 3 by the line sensor cameras 1, 2, the camera 1 on the right-hand side as seen in the front view of FIG. 2 detects the line marking 6 at a position inward from the left extremity of its inspection range L1 by a distance of N1, while the camera 2 on the opposite left-hand side detects the same line marking 6 at a position inward from the right extremity of its inspection range L2 by a distance of N2, as shown in FIG. 2. In combining the image data from the two line sensor cameras 1, 2 for the overlapped inspection range L3, portion of the data of image grabbed by the camera 1, which portion corresponds to a range for the distance N1 in FIG. 2, and also portion of the data of image grabbed by the other camera 2, which portion corresponds to a range for the distance N2, are excluded for the combination of image data so that the entire inspection range by each scanning is covered complementarily by the inspection ranges of the two adjacent cameras. By so combining, the image data provided by the two separate line sensor cameras 1, 2 for the overlapped range L3 share no part of data in common and the combination of the image data transmitted by two line sensor cameras 1,2 for the overlapped range L3 can be accomplished easily and rapidly.

On the other hand, when a broad article 3 having a different thickness or a wavy surface so that the inspection surface 3a of the article 3 is moved at an elevated position indicated by Pb, the camera 1 detects the line marking 6 at a position inward from the left extremity of its inspection range L1 by a distance of M1, while the camera 2 detects the same line marking 6 at a position inward from the right extremity of its inspection range L2 by a distance of M2. For combination of image data from the line sensor cameras 1, 2 for the overlapped range L3, portion of the data of image grabbed by the camera 1, which portion corresponds to a range for the distance M1, and portion of the data of image grabbed by the other camera 2, which portion corresponds to a range for the distance M2, are excluded for the combination of the image data of the overlapped inspection range L3.

Obviously the above method of combining image data for the overlapped inspection range L3 holds true when the article 3 is moved with its inspection surface 3a lying at a position other than the above positions Pa, Pb.

In inspecting the surface 3a of the broad article 3 which is moved in arrow direction, the data of line images taken by the line sensor cameras 1, 2 are process for combination thereof without delay, so that the condition of the inspection surface 3a can be inspected accurately and timely.

Although the foregoing has described the present invention by way of a specific embodiment, it is to be understood that the present invention is not limited to the illustrated embodiment, but it can be practiced in various changes and modifications, as exemplified below.

Though only two cameras 1, 2 have been used in the above embodiment, three or more line sensor cameras may be used for inspection of the surface 3a of the broad article 3. In such a case, two or more light projectors 5 should be used for producing line markings 6 at the center of the respective overlapped inspection ranges of inspection ranges of any two adjacent line sensor cameras.

Though in the above embodiment the light projector 5 is disposed such that the line marking 6 appears at the center of the overlapped range L3, the marking 6 does not necessarily have to be at the center of the overlapped range L3, but any position will do as far as it is located at any intermediate position within the overlapped inspection range. In such a case, the portions of the image data for exclusion are selected on the basis of the intermediate marking so that the inspection ranges of the two adjacent cameras cover complementarily the entire inspection range. For accurate inspection of the overlapped range L3, the marking 6 in the form of a short line should be as thin as possible and, for this purpose and distinctness, the light should preferably be a red laser beam projected from a laser projector.

It is noted that the line sensor cameras 1, 2 do not necessarily have to be arranged in alignment with each other so that their inspection ranges L1, L2 are precisely aligned with each other, but they may be disposed in such a way that the inspection ranges L1, L2 are located out of alignment for the sake of ease of installation and setting of the line sensor cameras 1, 2. It is also noted that, as far as the inspection ranges L1, L2 of the two cameras 1, 2 are aligned with each other, the marking 6 appearing in the overlapped inspection range L3 may be in the form a spot located in the overlapped range L3 instead of the short line extending across range L3.

As a sensor camera, a color sensor camera is preferable for its capability of color recognition and distinction. When inspecting the surface of an article having a single color or only a few colors, such as colored film, for the absence of any flaw on its top surface, however, a monochromatic sensor camera may be used which is capable of detecting line marking the lightness or brightness of which is different from that of the surface to be inspected.

Though not shown in the drawings, an area sensor camera may be used instead of a line sensor camera when inspecting areas on a discrete sheet or plate conveyed intermittently. In such a case, the line marking should extend throughout the area in the direction in which the sheet or plate is moved.

If any defect in the article such as void or crank passes through the location of the line marking 6, the sensor cameras 1, 2 fail to detect the line marking 6 temporarily. Since the marking position remains unchanged, the position thereof can be estimated based on the marking detected upstream or downstream of the defect. Thus, combination of the image data may be accomplished on the basis of the estimated marking position.

## Claims

1. A method of inspecting a broad article having a broad surface for inspection and movable in the direction across the width thereof, by using a plurality of sensor cameras, said method comprising,
arranging said sensor cameras spaced away from said inspection surface of the article and at an interval spaced away from each other along said width of the article such that the sensor cameras have an inspection range on said inspection surface, respectively, and any two adjacent sensor cameras share in common an inspection range which is overlapped by parts of said inspection ranges of said two adjacent sensor cameras, said sensor cameras being operable to grab an image at said inspection ranges and to generate data of said image;
illuminating said inspection ranges and their vicinities;
projecting a light to said overlapped common inspection range such that a marking from said light appears at an intermediate position in said overlapped common inspection range, said marking having a color which is different from any color included in said inspection surface of the article; and
combining the image data generated by said two adjacent sensor cameras for said overlapped common inspection range through calculation in such a way that a portion of the data of image grabbed by one of said two adjacent sensor cameras, corresponding to an inspection range between said marking and one extremity of the inspection range of said one camera on the side adjacent to the inspection range of the other sensor camera and also a portion of the data of image grabbed by said other sensor camera, corresponding to an inspection range between said marking and one extremity of the inspection range of said other camera on the side adjacent to the inspection range of said one camera are excluded for the combination of the image data.

2. A method of inspecting a broad article according to claim 1, wherein said sensor camera includes a line sensor camera which is operable to take a line image of said inspection surface.

3. A method of inspecting a broad article according to claim 2, wherein said line sensor cameras are aligned with each other along the width of said broad article and oriented substantially perpendicular to said inspection surface.

4. A method of inspecting a broad article according to claim 2, wherein said light projected to said overlapped common inspection range includes a laser beam.

5. A method of inspecting a broad article according to claim 2, wherein said marking includes a line marking which extends across said overlapped common inspection range at said intermediate position in said overlapped common inspection range.

6. A method of inspecting a broad article according to claim 2, wherein said marking appears at the center of said overlapped common inspection range.

7. A method of inspecting a broad article having a broad surface for inspection and movable in the direction across the width thereof, by using a plurality of sensor cameras, said method comprising,
arranging said sensor cameras spaced away from said inspection surface of the article and at an interval spaced away from each other along said width of the article such that the sensor cameras have an inspection range of an entire inspection range on said inspection surface, respectively, and any two adjacent sensor cameras share in common an inspection range which is overlapped by parts of said inspection ranges of said two adjacent sensor cameras, said sensor cameras being operable to grab an image at said inspection ranges and to generate data of said image;
illuminating said inspection ranges and their vicinities;
projecting a light to said overlapped common inspection range such that a marking from said light appears at an intermediate position in said overlapped common inspection range, said marking having a color which is different from any color included in said inspection surface of the article; and
combining the image data generated by said two adjacent sensor cameras for said entire inspection range through calculation in such a way that a portion of the data of image grabbed by one of said two adjacent sensor cameras and a portion of the data of image grabbed by said other sensor camera are excluded for the combination of the image data, said portions of the data for exclusion being selected on the basis of said marking so that the inspection ranges of said two adj acent cameras cover complementarily said entire inspection range.
